(19)

Europäisches
Patentamt
European
Patent Office
Office européen
des brevets

(11) **EP 4 461 060 B1**

(12) **EUROPEAN PATENT SPECIFICATION**

(45) Date of publication and mention
of the grant of the patent:
**01.07.2026 Bulletin 2026/27**

(21) Application number: **22917917.1**

(22) Date of filing: **10.01.2022**

(51) International Patent Classification (IPC):
*H04W 72/04* (2023.01)    *H04W 72/25* (2023.01)
*H04W 76/14* (2018.01)    *H04W 92/18* (2009.01)

(52) Cooperative Patent Classification (CPC):
**H04W 72/25; H04W 76/14;** H04W 36/03;
H04W 92/18

(86) International application number:
**PCT/CN2022/071011**

(87) International publication number:
**WO 2023/130446 (13.07.2023 Gazette 2023/28)**

(54) **METHODS AND SYSTEMS FOR DEVICE-TO-DEVICE COMMUNICATIONS**

VERFAHREN UND SYSTEME FÜR VORRICHTUNG-ZU-VORRICHTUNG-KOMMUNIKATIONEN

PROCÉDÉS ET SYSTÈMES POUR DES COMMUNICATIONS DE DISPOSITIF À DISPOSITIF

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.11.2024 Bulletin 2024/46**

(73) Proprietor: **ZTE Corporation
Shenzhen, Guangdong 518057 (CN)**

(72) Inventors:
• **DU, Weiqiang
Shenzhen, Guangdong 518057 (CN)**
• **LUO, Wei
Shenzhen, Guangdong 518057 (CN)**

(74) Representative: **Vossius & Partner
Patentanwälte Rechtsanwälte mbB
Siebertstraße 3
81675 München (DE)**

(56) References cited:
**WO-A1-2020/092939    WO-A1-2020/134902
WO-A1-2020/169024    WO-A1-2021/207459**

WO-A1-2021/237663    WO-A1-2022/002125
CN-A- 107 409 313    US-A1- 2021 227 620
US-A1- 2023 137 334

• **LG ELECTRONICS: "Discussion on feasibility
and benefits for mode 2 enhancement", vol. RAN
WG1, no. e-Meeting; 20201026 - 20201113, 1
November 2020 (2020-11-01), XP052349257,
Retrieved from the Internet <URL:https://
ftp.3gpp.org/tsg_ran/WG1_RL1/TSGR1_103-e/
Docs/R1-2007896.zip R1-2007896 Discussion on
sidelink mode 2 enhancement.docx> [retrieved
on 20201101]**
• **LG ELECTRONICS: "Discussion on feasibility
and benefits for mode 2 enhancement", 3GPP
TSG RAN WG1 MEETING #103-E, R1-2007896, 24
October 2020 (2020-10-24), XP051946544**
• **FRAUNHOFER HHI, FRAUNHOFER IIS:
"Resource Allocation Enhancements for Mode
2", 3GPP TSG RAN WG1 MEETING #106-E,
R1-2107023, 6 August 2021 (2021-08-06),
XP052033354**

EP 4 461 060 B1

Description

## TECHNICAL FIELD

This disclosure is directed generally to wireless communications.

## BACKGROUND

Mobile communication technologies are moving the world toward an increasingly connected and networked society. The rapid growth of mobile communications and advances in technology have led to greater demand for capacity and connectivity. Other aspects, such as energy consumption, device cost, spectral efficiency, and latency are also important to meeting the needs of various communication scenarios. Various techniques, including new ways to provide higher quality of service, longer battery life, and improved performance are being discussed.
WO 2021/207459 A1 discloses that an exchange of resource allocation assistance information between a requester User Equipment (UE) and an assistant UE allows the requester to make better resource allocation decisions.
3GPP DRAFT; R1-2007896 discloses that a set of resources determined at UE-A is sent to UE-B in mode 2 and UE-B takes this into account in the resource selection for its own transmission. WO2022/002125 A1 discloses that a first terminal may determine the sidelink assistance information according to the constraints specified in the protocol or configured or pre-configured by the control node or indicated by the second terminal, the constraints including restrictions on a maximum number of resources.

## SUMMARY

The invention is specified by the independent claims. Preferred embodiments are defined in the dependent claims. In the following description, although numerous features may be designated as optional, it is nevertheless acknowledged that all features comprised in the independent claims are not to be read as optional.
This patent document describes, among other things, techniques for device-to-device communications such as sidelink communication techniques and inter-UE coordination techniques.
In one example aspect, a method of wireless communication is disclosed. The method includes generating, by a first user device, an assistance information, and transmitting, by the first user device, the assistance information to a second user device.
In another example aspect, a method of wireless communication is disclosed. The method includes performing, by a first user device, a selection of a destination, and performing a multiplexing of data of a logical channel (LCH) or a media access control (MAC) control element (CE) belonging to the selected destination into a medium assess control (MAC) protocol data unit (PDU).
In yet another example aspect a wireless communication apparatus is disclosed. The apparatus includes a processor configured to implement a method disclosed in the present document
In yet another example aspect, a computer-readable medium is disclosed. The medium has processor-executable code stored thereon. The code, upon execution, causes the processor to implement a method disclosed in the present document.
These, and other, aspects are described in the present disclosure.

## BRIEF DESCRIPTION OF DRAWINGS

FIG. 1 shows an example wireless network in which sidelink communication is used.
FIG. 2 shows an example of inter-UE communication.
FIG. 3 shows an example of a wireless communication method based on some embodiments of the disclosed technology.
FIG. 4 shows another example of a wireless communication method based on some embodiments of the disclosed technology.
FIG. 5 shows an example of a wireless communication network.
FIG. 6 shows an example hardware platform for implementation of a disclosed method.

## DETAILED DESCRIPTION

Headings for the various sections below are used to facilitate the understanding of the disclosed subject matter and do not limit the scope of the claimed subject matter in any way. Accordingly, one or more features of one example section can be combined with one or more features of another example section. Furthermore, 5G terminology is used for the sake of clarity of explanation, but the techniques disclosed in the present document are not limited to 5G technology only and may be used in wireless systems that implemented other protocols. Although some embodiments are described with reference to vehicle based wireless communication functionality, the disclosed techniques may be used by a variety of different wireless device including, e.g., a mobile phone, a tablet, and other wireless devices.

The present document relates to wireless systems. More specifically, it relates to communications between UE for side link communication, and for the scheduling of resources. Necessary information and assistance information can be exchanged by one UE to another so that the inter-UE coordination can be configured.

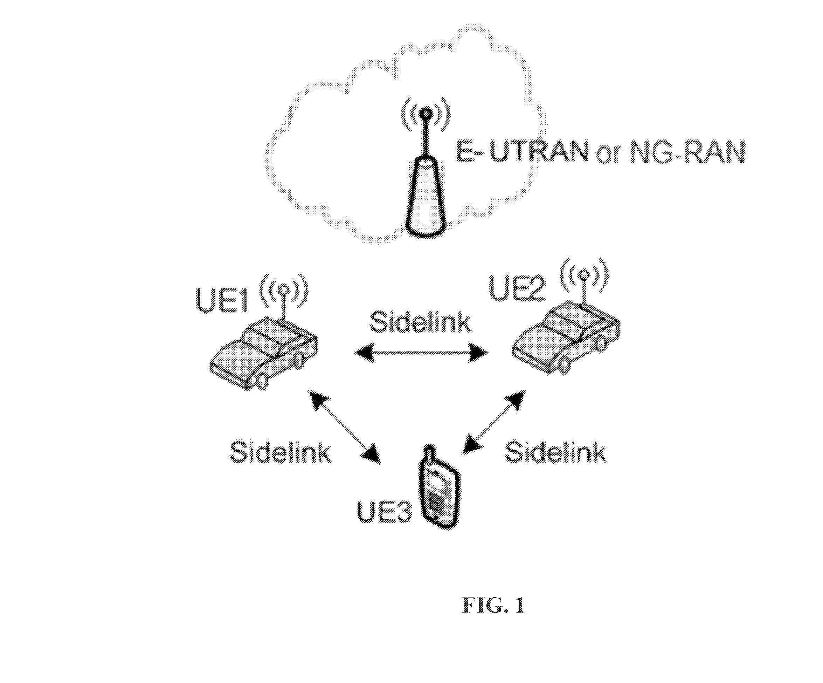

FIG. 1 is a block diagram of an example V2X (vehicle-to-vehicle) communication system. In the LTE (Long Term Evolution)-based V2X communications study organized by the Third Generation Partnership Project 3GPP, user devices (User Equipment UE) may communicate using V2X communication between a direct/sidelink link. For example, data may not be forwarded by the base station and the core network, and may be directly transmitted by the source UE to the target UE through an air interface (PC5 interface), as shown in FIG. 1.

With the development of wireless multimedia services, user demand for high data rates and user experience are increasing, which puts forward higher requirements on the system capacity and coverage of traditional cellular networks. On the other hand, application scenarios such as public safety, social networking, short-distance data sharing, and local advertising have gradually increased the demand for people to understand and communicate with nearby people or things (Proximity Services). The traditional base station-centric cellular network has obvious limitations in terms of high data rate and proximity service support. Under the background of this demand, the device-to-device D2D (Device-to-Device) communication technology has emerged. The application of D2D technology can reduce the burden on the cellular network, reduce the battery power consumption of user equipment, increase the data rate, and improve the robustness of the network infrastructure, which satisfies the requirements of the aforementioned high data rate services and proximity services. D2D technology is also called Proximity Services (ProSe), unilateral/sidelink/Sidelink (SL) communication; the interface between the device and the device is the PC5 interface.

In the current NR sidelink communication system, there is no negotiation of the data transmission time between the user equipment and the device. For the user equipment (UE) that uses NR sidelink mode 2 communication, it needs to continuously monitor the data receiving channel to assist in sending resources. At the same time, the UE sensing mechanism in the existing NR sidelink communication system cannot accurately obtain the communication conditions of the peer UE, which is prone to hidden and exposed terminals. In order to avoid this problem, the UE can use the auxiliary resources provided by other UE selection information (e.g., inter-UE coordination).

In this patent document, two types of UEs (UE-B, UE-A) will be discussed in inter-UE coordination scenarios.

In some implementations, a UE that sends an explicit request for inter-UE coordination information can be UE-B, and a UE that received an explicit request from UE-B and sends inter-UE coordination information to the UE-B can be UE-A.

In some implementations, UE-B transmits physical sidelink control channel (PSCCH)/physical sidelink shared channel (PSCCH) with sidelink control information (SCI) indicating reserved resource(s) to be used for its transmission, receives inter-UE coordination information from UE-A indicating expected/potential resource conflict(s) for the reserved resource(s), and uses it to determine resource re-selection.

In some implementations, UE-A detects expected/potential resource conflict(s) on resource(s) indicated by UE-B's SCI, and sends inter-UE coordination information to UE-B, subject to satisfaction of one of the conditions discussed below.

In some implementations, UE-A provides the assistance information for UE-B's data transmission.

SCI format 1-A including:

- Priority - 3 bits as specified in clause 5.4.3.3 of [12, TS 23.287] and clause 5.22.1.3.1 of [8, TS 38.321].

- Frequency resource assignment - $\left\lceil \log_2\left(\frac{N_{\text{subChannel}}^{\text{SL}}\left(N_{\text{subChannel}}^{\text{SL}}+1\right)}{2}\right)\right\rceil$ bits when the value of the higher layer parameter *sl-MaxNumPerReserve* is configured to 2; otherwise $\left\lceil \log_2\left(\frac{N_{\text{subChannel}}^{\text{SL}}\left(N_{\text{subChannel}}^{\text{SL}}+1\right)\left(2N_{\text{subChannel}}^{\text{SL}}+1\right)}{6}\right)\right\rceil$ bits when the value of the higher layer parameter *sl-MaxNumPerReserve* is configured to 3, as defined in clause 8.1.2.2 of [6, TS 38.214].

- Time resource assignment - 5 bits when the value of the higher layer parameter *sl-MaxNumPerReserve* is configured to 2; otherwise 9 bits when the value of the higher layer parameter *sl-MaxNumPerReserve* is configured to 3, as defined in clause 8.1.2.1 of [6, TS 38.214].

- Resource reservation period $-\left\lceil \log_2 N_{\rm rsv\_period} \right\rceil$ bits as defined in clause 8.1.4 of [6, TS 38.214], where $N_{\rm rsv\_period}$ is the number of entries in the higher layer parameter *sl-ResourceReservePeriodList,* if higher layer parameter *sl-MultiReserveResource* is configured; 0 bit otherwise.

**Example Embodiment 1**

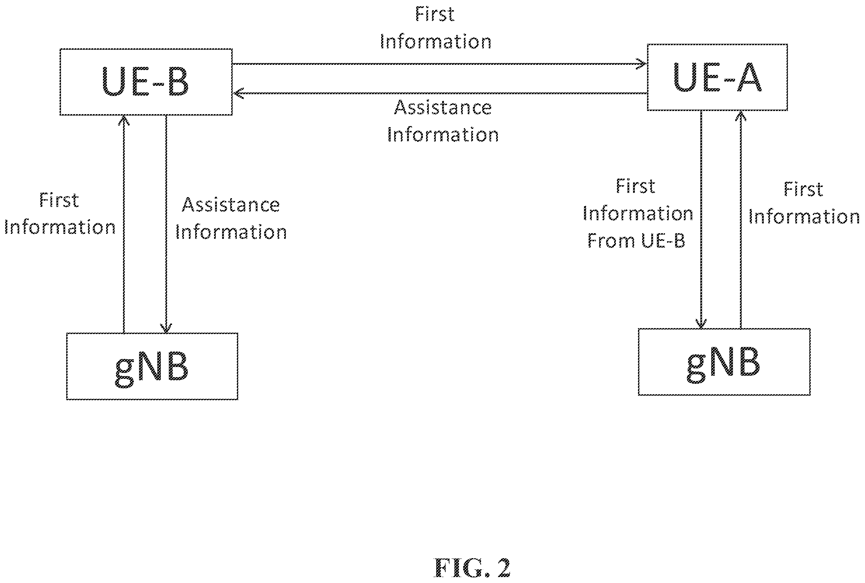

FIG. 2 shows an example of inter-UE communication.

Inter-UE coordination indicates that UE-A sends assistance information (e.g., resource assistance information) to UE-B for resource selection.

The assistance information includes N combinations, each combination includes at least one of the following: a time resource indicator value (TRIV), a frequency resource indicator value (FRIV), a resource reservation period. One or more resources can be encoded into one combination. In addition, each TRIV or FRIV is calculated based on a reference time or a frequency location corresponding to the TRIV or FRIV. Therefore, the reference time or frequency location is included in the assistance information. In other embodiments, the reference time or frequency location will be described. Also, in other embodiments, how to minimize the size of the assistance information will be described.

UE-A may generate many combinations, and thus, if all combinations are included in the assistance information, a signaling overhead may occur.

In one embodiment, UE-A receives first information to determine the resource assistance information. The first information can be received from UE-B or the network. Here, the first information may include at least one the following.

1. A resource selection window [T1, T2]. This is to indicate the resource range for UE-A to provide the assistance information. Since UE-B can only select the resource within the selection windows, UE-A can only provide the assistance information according to the resource selection window.

2. A time value T3. Here, T3 indicates a packet delay budget (PDB) of the assistance information. In other words, UE-A sends the resource assistance information before T3 has elapsed.

3. A PDB value. This indicates the PDB of the assistance information. 2 and 3 describe the PDB of the assistance information, since, if the sensing is triggered, UE-B must determine the resource before the selection windows. Therefore, UE-A must provide the resource before a specific time has elapsed, so that UE-B can have enough time to process the resource.

4. Priority value to be used for PSCCH/PSSCH transmission.

5. Number of sub-channels to be used for PSSCH/PSCCH transmission in a slot.

6. Resource reservation interval. 4, 5, and 6 describe the necessary parameters for UE-A sensing to determine the assistance information.

7. How many combinations should be reported. This is used to address the signaling overhead issue.

8. How many resources should be reported. This is used to address the signaling overhead issue.

9. The priority of the assistance information. This priority is used to perform a logical channel prioritization (LCP) of the assistance information in UE-A.

10. The reference time location of TRIV of combination. This field indicates the reference time location used by UE-A to determine the assistance information.

11. The reference frequency location of FRIV of each combination. This field indicates the reference frequency location used by UE-A to determine the assistance information.

In one embodiment, UE-A sends the resource assistance information before a specific time has elapsed. The specific time can be:

1. T1 or T2 or t3.

2. Calculated by a formula. The input of the formula can be one or more of the following: T1 or T2 or t3 or any combination of the three time values. For example, the specific time can be: T1-t3.

In one embodiment, UE-A may be scheduled by gNB. Therefore, UE should report the received first information (described above) to gNB for better resource control.

In one embodiment, UE-A receives the first information obtained from gNB.

In another embodiment, UE-B can receive the first information from gNB. In this case, UE-B does not need to determine the contents of the first information, and the contents are received from gNB.

In one embodiment, the first information can be a request for the assistance information. In this case, UE-A provides the assistance information after receiving the request. This is trigger-based assistance information.

In one embodiment, UE-A can provide the assistance information based on some pre-defined conditions, without a request from UE-B. In this case, this is condition-based assistance information.

**Example Embodiment 2**

In some implementations, the assistance information can be sent to UE-B via MAC CE.

In an implementation, TRIV, or FRIV or a resource reservation period can be included in the assistance information. In another implementation, TRIV, or FRIV or a resource reservation period is not included in the assistance information. For example, the assistance information includes 3 combinations: (TRIV1, FRIV1, period1), (TRIV, period), and (FRIV, period).

In one embodiment, to help UE-B to decode the assistance information, some fields are included int the assistance information. The assistance information may include at least one of the following.

0. N combinations, where N is an integer.

1. How many resources are included in the assistance information.

2. An indication of whether TRIV is included in the assistance information for each combination.

3. An indication of whether FRIV is included in the assistance information for each combination.

4. An indication of whether reference time location is included in the assistance information.

5. An indication of whether reference frequency location is included in the assistance information.

6. An indication of whether resource reservation period is included in the assistance information.

7. The reference time location of TRIV of each combination.

8. The reference frequency location of FRIV of each combination.

9. The resource reservation period of the combination included in the assistance information.

10. An index of resource reservation period included in resource reservation period list.

11. Whether the combination in the assistance information is a preferred resource or a non-preferred resource for UE-B transmission. Since the resource in the assistance information may be the preferred resource for UE-B transmission, or the non-preferred resource for UE-B transmission, from UE-A perspective. For example, UE-B shall avoid using the resource reserved for UE-A transmission.

12. T1, if UE-A's sensing window of assistance information is [T1, T2].

13. T2, if UE-A's sensing window of assistance information is [T1, T2].

14. A resource pool indication. This field indicates which resource pool the resource in the assistance information belongs to.

15. Whether the assistance information is truncated or not. When assistance information is delivered via MAC CE, the MAC CE can be a truncated MAC CE.

16. Whether the assistance information is conditional based or not.

17. Whether the assistance information is triggered based or not.

18. TRIV.

19. FRIV.

20. Resource reservation period.

21. A reference combination index. This index indicates a combination in the assistance information. In a case that one combination does not include the TRIV or FRIV or resource reservation period, the combination shares the TRIV or FRIV or resource reservation of the reference combination index. The index indicates the combination in the assistance information.

22, A reference resource reservation period index. This index indicates an entry in the period list associated to the resource pool. In a case that a period is not included in the combination, the period of this combination is a period indicated by this index.

In one embodiment, to minimize the size of signaling, the assistance information includes only one reference time location shared by all TRIVs in the assistance information.

In one embodiment, to minimize the size of signaling, the assistance information includes one reference frequency time location shared by all FRIVs in the assistance information.

In one embodiment, to minimize the size of signaling, the assistance information does not include the reference time location. In this case, the reference time location is a reference time location of a resource pool. In another embodiment, the reference time location is configured by UE-B. In another embodiment, the reference time location is the time location where the assistance information request is transmitted. In one embodiment, the reference time location of the resource pool is the first slot within the resource pool.

In one embodiment, to minimize the size of signaling, the assistance information does not include the reference frequency location. In this case, the reference frequency location is a reference frequency location of a resource pool. In one embodiment, the reference frequency location of the resource pool is the reference frequency location of BWP where the resource pool is located.

In one embodiment, the resource pool indication in the assistance information is the resource pool where the assistance information request is transmitted. In another embodiment, the resource pool is the resource pool where the assistance information is transmitted.

In one embodiment, if one combination in the assistance information does not include the TRIV or FRIV or period, then the TRIV or FRIV or period is the same as the TRIV or FRIV or period of another combination included in the assistance information. The other combination can be at least one of the following: the first combination in the assistance information, the prior combination in the assistance information, the posterior combination, the last combination in the assistance information, or a combination indicated by the reference combination.

In another embodiment, in a case that the period is not included in the combination, the resource reservation period is a least one of the following:

1. The first period in the period list.
2. The last period in the period list.
3. The period indicated by the reference period index.

In one embodiment, the non-preferred resource is listed prior to the preferred resource in the assistance information.

**Example Embodiment 3**

The disclosed technology can be implemented in some embodiments to multiplex assistance information.

In transmitting the assistance information to UE-B, the disclosed technology can be implemented in some embodiments to address the following issues.

1. The priority of assistance information.
2. The SR configuration of assistance information.
3. The HARQ enable or disable attribute of assistance information.
4. The BSR enhancement for assistance information.
5. The resource pool for transmitting assistance information.

In one embodiment, to perform the LCP, the priority of the assistance information needs to be determined. The priority can be one of the following.

1. The fixed priority configured by UE-B or gNB.
2. Priority value to be used for PSCCH/PSSCH transmission included in the first information.

In one embodiment, UE-A can multiplex more than one pieces of assistance information in the same MAC PDU. In this case, the more than one pieces of assistance information can have different priorities. For example, in case the assistance information is delivered via MAC CE, two pieces of assistance information MAC CE can be multiplexed into the same MAC PDU. The reason why more than one pieces of assistance information are possible is that if UE-A encodes all generated combinations into the MAC CE, the SL grant cannot satisfy the transmission of the MAC CE, i.e., a signaling overhead occurs. One possible solution is that the priority of the assistance information is the lowest priority, then how many resource or combination are included in the MAC PDU depends on the size the grant. However, it is also possible that none of the combinations can be multiplexed into the MAC PDU since the SL grant is exhausted by another high priority LCH. Therefore, more than one assistance information is included in the MAC PDU to balance these two issues (the signaling overhead and resource exhausted). In this case, different assistance information has a different priority, so that they can be multiplexed into the MAC PDU with a different order.

In one embodiment, if UE-A has X resources to be transmitted to UE-B, and encodes the X resources to N combinations of TRIV, FRIV, resource reservation period, UE-A can select one or more of the following options to encode the N combinations into more than one inter-UE MAC CE.

Option1: UE-A is configured with a value V, then UE should encode at most the V resources into one assistance information. In another embodiment, UE encodes the remaining X-V resources into another assistance information as much as possible, i.e., depends on the size of grant. If X is less than V1, then UE should encode all X resources into 1st assistance information. In another embodiment, the UE-A is configured with two values V11 and V12, then UE should encode at most V11 preferred resources and V12 non-preferred resources into the 1st assistance information. In another embodiment, UE encodes the remaining preferred and non-preferred resources in another assistance information.

Option2: UE-A is configured with a value V2. If N is large than V2, then UE should encode the V2 combinations into 1st assistance information and encode the remaining N-V2 resources into 2nd assistance information. If N is less than V2, then UE should encode all N combinations into 1st assistance information. In another embodiment, the UE-A is configured with two values V21 and V22, then UE should encode at most V21 preferred resources and V22 non-preferred resources into the 1st assistance information. In another embodiment, UE encodes the remaining preferred and non-preferred resources in another assistance information.

Option3: UE-A should encode all the preferred resources into 1st assistance information and all the non-preferred resources into 2nd assistance information.

Option4: UE-A is configured with a value V3. The size of 1st assistance information should not be large than V3.

In one embodiment, the opiton1-4 can be extended to more than two pieces of assistance information, for example, UE is configured with a list of value [5, 10, 15], UE puts the 0-5 resources into 1st assistance information, 5-10 resources into 2nd assistance information, and 10-15 resources into 3rd assistance information.

To address the signaling overhead issue, the resource included in the assistance information is determined as the following.

Option1. In one embodiment, UE-A is configured with a value N, at most N resource or combination can be selected.

Option2. In one embodiment, UE-A is configured with a value N, the size of assistance information shall not be larger than N.

Option3, in one embodiment, UE-A select the as many as possible resources or combinations in a case higher priority data has been multiplexed into the MAC PDU.

Option4. UE-A is configured with a priority group, UE-A selects the resource included in the assistance information in the order of their sequence numbers (from a higher number to a lower number). The priority group includes one or more of the following:

(1) Resource(s) excluding those overlapping with reserved resource(s) of other UE identified by UE-A whose RSRP measurement is larger than a RSRP threshold. This resource is a preferred resource. In further embodiment, the resource is listed in RSRP order. In another embodiment, a low RSRP order (or sequence number) is listed first.
(2) Resource(s) excluding slot(s) where UE-A does not expect to perform SL reception from UE-B, when it is an intended receiver of UE-B. This resource is a preferred resource.
(3) Resource(s) satisfying UE-B's traffic requirement (if available). In one example, this resource is a preferred resource. In another example, this resource is a non-preferred resource.
(4) Reserved resource(s) of another UE identified by UE-A from other UEs' SCI (including a priority field) and RSRP measurement. This resource is a non-preferred resource.
(5) Resource(s) (e.g., slot(s)) where UE-A does not expect to perform SL reception from UE-B, when it is an intended receiver of UE-B. This resource is a non-preferred resource.
(6) Resource(s) (e.g., slot(s)) where UE-A is selected for its own SL transmission(s). This resource is a non-preferred resource. In another embodiment, the resource is listed in a priority order. In another embodiment, a high-priority transmission resource is listed first.
(7) Preferred resource.
(8) Non-preferred resource.

In another embodiment, more than one option can be selected to balance the signaling overhead and the resource exhaustion. For example, for each resource in the priority group, UE is configured with a value P, and at most P resources can be included in the assistance information. For example, at most P preferred resources are included in the assistance information, where P is a positive integer. As another example, at most P non-preferred resources are included in the assistance information, where P is a positive integer.

In another embodiment, more than one options can be selected to balance the signaling overhead and the resource exhaustion. For example, the option1 and option 4 are combined, and UE-A selects the resources to be included in the assistance information in the order of their sequence numbers (e.g., from a higher number to a lower number) until at most V resources are selected.

In another embodiment, as discussed above, if not all resources are included in one assistance information, the remaining resources can be included in another assistance information. Then UE-A determine the resource included in the assistance information can also follow above options (option1, 2, 3, 4 in this example). In this case, the first generated assistance shall be considered prioritized during LCP. Another assistance information shall be considered as non-prioritized.

In a case that there are some padding bits, UE-A can multiplex assistance information into the padding bits. In addition, the padding bits may not be enough to capture all the remaining resources or combinations. In this case, the determination of which resources or combinations should be included in the assistance information follows above described options (option1, 2, 3, 4 in this example).

For example, in a case that the assistance information is delivered via MAC CE, the multiplexed order of UE for multiplexing is:

- data from SCCH;
- Sidelink CSI Reporting MAC CE;
- prioritized assistance information MAC CE.
- data from any STCH.
- non-prioritized assistance information MAC CE.
- assistance information MAC CE using padding bits.

**Example Embodiment 4**

The disclosed technology can be implemented in some embodiments to provide a scheduling request (SR) and a buffer state report (BSR) of the assistance information.

In a case that the assistance information is delivered via MAC CE, the disclosed technology can be implemented in some embodiments to address the following issues.

1. The priority of the assistance information MAC CE.
2. The SR configuration of the assistance information MAC CE.
3. The HARQ enable or disable attribute of the assistance information MAC CE.
4. The BSR enhancement for the assistance information MAC CE.
5. The resource pool determination for transmitting the assistance information MAC CE.

In one embodiment, in a case UE-A is scheduled by gNB, UE-A needs to report at least one of the following information to gNB for resource allocation.

1. How many resources need to be sent to UE-B
2. How many combinations need to be sent to UE-B
3. The size of the assistance information.
1,2,3 is used for gNB to evaluate the size of transmission resource used by UE-A.
4. The resource pool or resource pool index where the assistance information is transmitted. 4 is used to determine the resource pool used for assistance information transmission. Since assistance information may does not include a resource pool indication, then UE-B may have more than one TX resource pool. Then UE-B considers the received assistance information belongs to the resource pool where the assistance information is received. And for triggered based assistance information, UE-A uses a TX resource pool used for UE-B's request transmission to transmit the assistance information to UE-B.
5. The ID of UE-B. The ID can be one of the following: DST L2 ID or DT L2 ID index.

In another embodiment, UE-A reports the information above via BSR or RRC signaling or MAC CE or PHY signaling.

In one embodiment, to avoid sending the report frequently and to limit the number of reports, UE-A initiates the report if at least one of the following conditions is met:

a. The size of the assistance information is large than a configured value.
b. The number of resources or combinations that need to be reported to UE-B is large than a configured value.
c. A prohibit timer is configured. The timer is started upon sending the report by UE-A to gNB. In addition, UE-A does not send the report to gNB if the timer is running.
d. A retransmit timer is configured. The timer is started upon sending the report by UE-A to gNB. In addition, UE-A sends the report to gNB upon expiration of the retransmit timer.
e. A periodic timer is configured. The timer is started upon generation of at least one resource or combination by UE-A. In addition, UE-A can send the report to gNB after the periodic timer expires.
f. The assistance information is available, and the priority of assistance information is higher than the priorities of the logical channels containing available SL data which belong to any LCG belonging to the same destination.
g. The assistance information is available, and none of the logical channels which belong to an LCG belonging to the same destination contains any available SL data.

In one embodiment, SR configuration for UE-A includes one of the following.

1 . SR resource for assistance information
2. SR resource for different priority of assistance information.
3. SR resource for different size of assistance information.
4. SE resource for different number of resources or combinations of assistance information.

**Example Embodiment 5**

In some cases, UE-B may receive different assistance information from different UE-As.

In one embodiment, the overlapped resources of multiple resource sets are selected first. Then, the resources with the following two options are select.

1. Random select
2. Select a resource with a priority group (high priority listed first)

    (1) Resource provided by destination UE-A associated with the highest priority LCH or MAC CE.
    (2) Resource provided by destination UE-A associated with the highest priority LCH or MAC CE.
    (3) Resource set provided by non-destination UE-A.

Here, destination UE-A indicates that the UE-A is one of RX UE of UE-B, and non-destination UE-A indicates that the UE-A is not RX UE of UE-B.

**Example Embodiment 6**

When UE-A obtains the resource to transmit device-to-device data, UE-A performs a destination selection and a logical channel selection, and performs a multiplexing of the data of selected LCH that belongs to the selected destination into the MAC PDU.

In some cases, assistance information can only be transmitted in a specific resource pool, and thus the destination selection or the logical channel selection needs to be enhanced.

In one embodiment, the assistance information can be sent via the MAC CE.

In one embodiment, during the destination selection, for a transmission resource or grant, UE first selects the logical channels and MAC CEs that can use the resource pool associated with the transmission, if the LCH or MAC CE can only use one or more specific resource pools. In addition, among the selected logical channels and MAC CEs, UE selects logical channels or MAC CEs with the highest priority, and finally selects the destination associated with LCHs or MAC CEs with the highest priority.

For example, if the assistance information is transmitted via MAC CE, UE has three destinations, and the corresponding LCH and MAC CE are transmitted as discussed below.

1. DST1: LCH-1(priority 2), LCH2 (priority 4), assistance information MAC CE (priority 1)
2. DST2: LCH-2 (priority 3)
3. DST3: assistance information MAC CE (priority 1)

In addition, assistance information MAC CE can only use resource pool (RP) 1.

EXP-1: If there is one resource from RP-2 for transmission, UE first selects LCHs and MACs can use this resource as discussed below.

4. DST1: LCH-1 (priority 2), LCH2 (priority 4)
5. DST2: LCH-2 (priority 3),

Then the destination that has LCH with the highest priority is selected, e.g., DST1 is selected.

EXP-2: If there is one resource from RP-1 for transmission, UE first selects LCHs and MACs that can use this resource as discussed below.

6. DST1: LCH-1 (priority 2), LCH2 (priority 4), assistance information MAC CE (priority 1)
7. DST2: LCH-2 (priority 3),
8. DST3: assistance information MAC CE (priority 1).

Then the destination that has LCH with the highest priority is selected, e.g., DST3 or DST1 can be selected in some implementations.

After a destination selection, for a transmission resource or grant, UE selects the LCH and MAC CEs multiplexed into the MAC PDU. UE selects the logical channels and MAC CEs that can use the resource pool associated with the transmission resource or grant, if the LCH or MAC CE can only use one or more specific resource pools. In addition, the selected LCH or MAC CEs are multiplexed into MAC PDU.

The above examples ((EXP-1) and (EXP-2)) can be used to illustrate this procedure.

For EXP-1, DST-1 as discussed below is selected, since the resource is from RP-2, and assistance information MAC CE can only use RP-1, then assistance information MAC CE cannot be selected to be multiplexed into the MAC PDU, and only LCH1 and LCH2 can be multiplexed into the MAC PDU.

9. DST1: LCH-1 (priority 2), LCH2 (priority 4), assistance information MAC CE (priority 1)

For EXP-2, suppose DST1 is selected. Then since this resource is from RP-1, and assistance information MAC CE can use RP-1, this MAC CE and LCH1, LCH2 can be multiplexed into the MAC PDU.

During the destination selection, a destination having at least one of the MAC CE and the logical channel with the highest priority is selected, among the logical channels or MAC CEs that satisfy the following conditions, if any, for the transmission resource.

1. The LCH or MAC CE is allowed to use the resource pool associated with the transmission resource, if the LCH or MAC CE can only use one or more specific resource pools.

During the logical channel selection, the logical channels satisfying the following conditions are selected among the logical channels belonging to the selected destination.

2. The LCH or MAC CE is allowed to use the resource pool associated with the transmission resource, if the LCH or MAC CE can only use one or more specific resource pools.

## Example Embodiment 7

If the serving cell of a RRC connected TX UE determines the SL DRX configuration for the RX UE, when it detects RLF or performs handover procedure, it may lose the connection with the network. Thus, who decides the SL DRX configuration for the RX UE when the TX UE loses the connection with the network is not clear.

If the TX UE detects RLF, it may need to use exception sidelink resource pool to perform sidelink transmission. That means the available sidelink transmission resource of the TX UE may be changed when the timer T310/T311 is running, so the SL DRX configuration of the RX UE may need to be changed, too. In addition, if the RX UE sends UE assistant information to request update SL DRX configuration when the timer T310/T311 of the TX UE is running, it may be necessary to reconfigure SL DRX for the RX UE. Thus, in this case, the TX can reconfigure SL DRX configuration for the RX UE by its own. in a word. TX UE can reconfigure SL DRX configuration for the RX UE by its own if the available sidelink transmission resource is changed or the RX UE is requested when the timer T310/T311 is running.

In another case, when the TX UE performs a handover procedure, it may also need to use exception sidelink resource pool to perform sidelink transmission. In addition, the RX UE may also send UE assistant information to request update SL DRX configuration when the timer T304 of the TX UE is running, so TX UE can reconfigure SL DRX configuration for the RX UE by its own if the available sidelink transmission resource is changed or the RX UE is requested when the timer T304 is running (during the handover procedure).

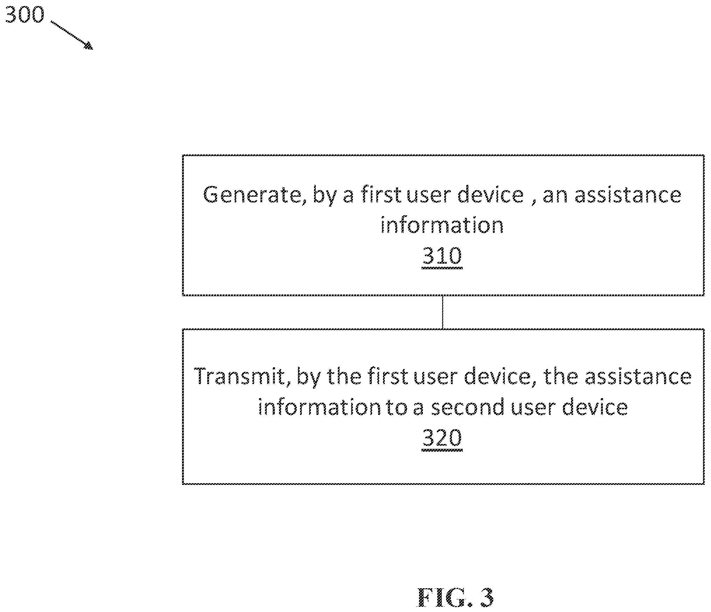

FIG. 3 shows an example of a wireless communication method based on some embodiments of the disclosed technology.

In some embodiments of the disclosed technology, a wireless communication method 300 includes, at 310, generating, by a first user device, an assistance information, and transmitting, by the first user device, the assistance information to a second user device. In one example, the first user device is UE-A and the second user device is UE-B in an inter-UE coordination scenario.

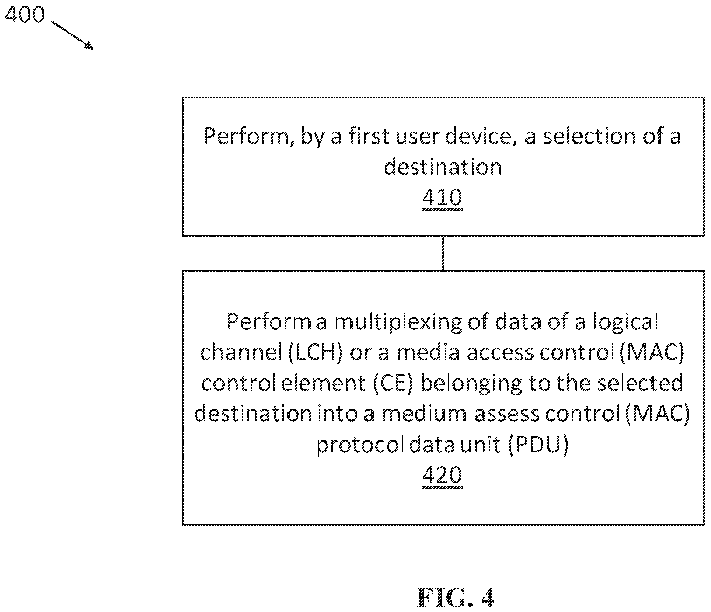

FIG. 4 shows another example of a wireless communication method based on some embodiments of the disclosed technology.

In some embodiments of the disclosed technology, a wireless communication method 400 includes, at 410, performing, by a first user device, a selection of a destination, and, at 420, performing a multiplexing of data of a logical channel (LCH) or a media access control (MAC) control element (CE) belonging to the selected destination into a medium assess control (MAC) protocol data unit (PDU).

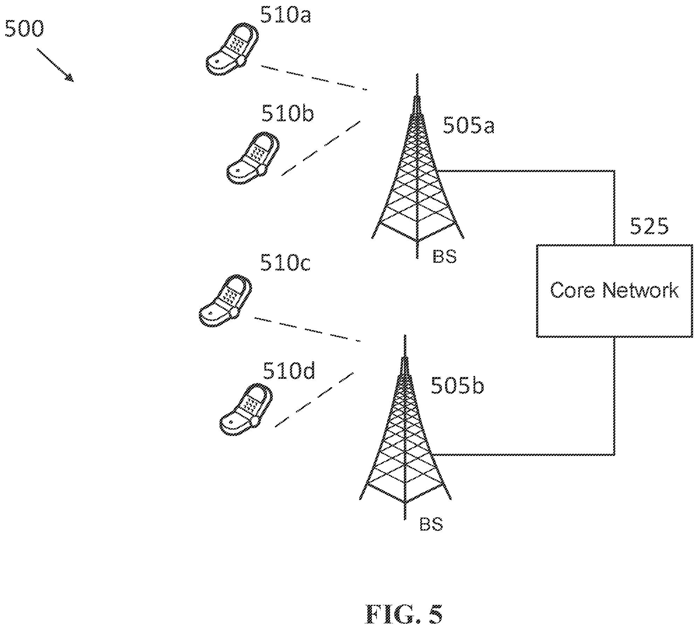

FIG. 5 shows an example of a wireless communication system 500 where techniques in accordance with one or more embodiments of the present technology can be applied. A wireless communication system 500 can include one or more base stations (BSs) 505a, 505b, one or more wireless devices 510a, 510b, 510c, 510d, and a core network 525. A base station 505a, 505b can provide wireless service to wireless devices 510a, 510b, 510c and 510d in one or more wireless sectors. In some implementations, a base station 505a, 505b includes directional antennas to produce two or more directional beams to provide wireless coverage in different sectors.

The core network 525 can communicate with one or more base stations 505a, 505b. The core network 525 provides connectivity with other wireless communication systems and wired communication systems. The core network may include one or more service subscription databases to store information related to the subscribed wireless devices 510a, 510b, 510c, and 510d. A first base station 505a can provide wireless service based on a first radio access technology, whereas a second base station 505b can provide wireless service based on a second radio access technology. The base stations 505a and 505b may be co-located or may be separately installed in the field according to the deployment scenario. The wireless devices 510a, 510b, 510c, and 510d can support multiple different radio access technologies. The techniques and embodiments described in the present document may be implemented by the base stations of wireless devices described in the present document.

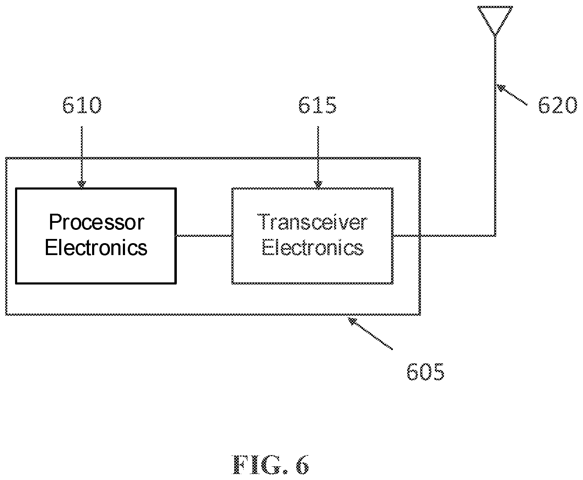

FIG. 6 is a block diagram representation of a portion of a radio station in accordance with one or more embodiments of the present technology can be applied. A radio station 605 such as a base station or a wireless device (or UE) can include processor electronics 610 such as a microprocessor that implements one or more of the wireless techniques presented in this document. The radio station 605 can include transceiver electronics 615 to send and/or receive wireless signals over one or more communication interfaces such as antenna 620. The radio station 605 can include other communication interfaces for transmitting and receiving data. Radio station 605 can include one or more memories (not explicitly shown) configured to store information such as data and/or instructions. In some implementations, the processor electronics 610 can include at least a portion of the transceiver electronics 615. In some embodiments, at least some of the disclosed techniques, modules or functions are implemented using the radio station 605. In some embodiments, the radio station 605 may be configured to perform the methods described herein.

It will be appreciated that the present document discloses techniques that can benefit various embodiments to perform device-to-device communications using, for example, sidelink communication techniques and inter-UE coordination techniques. In one advantageous aspect, the disclosed techniques may be used to reduce power consumption of user devices.

It will be appreciated that the present document discloses techniques that can be embodied in various embodiments and configurations. It should be understood that concepts from some embodiments can be used for other embodiments. The disclosed and other embodiments, modules and the functional operations described in this document can be implemented in digital electronic circuitry, or in computer software, firmware, or hardware, including the structures disclosed in this document and their structural equivalents, or in combinations of one or more of them. The disclosed and other embodiments can be implemented as one or more computer program products, i.e., one or more modules of computer program instructions encoded on a computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more them. The term "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them. A propagated signal is an artificially generated signal, e.g., a machine-generated electrical, optical, or electromagnetic signal, that is generated to encode information for transmission to suitable receiver apparatus.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

The processes and logic flows described in this document can be performed by one or more programmable processors executing one or more computer programs to perform functions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and any one or more processors of any kind of digital computer. Generally, a processor will receive instructions and data from a read only memory or a random-access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto optical disks; and CD ROM and DVD-ROM disks. The processor and the memory can be supplemented by, or incorporated in, special purpose logic circuitry.

While this patent document contains many specifics, these should not be construed as limitations on the scope of any invention or of what may be claimed, but rather as descriptions of features that may be specific to particular embodiments of particular inventions. Certain features that are described in this patent document in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a combination can in some cases be excised from the combination and be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. Moreover, the separation of various system components in the embodiments described in this patent document should not be understood as requiring such separation in all embodiments.

Only a few implementations and examples are described, and other implementations, enhancements and variations can be made based on what is described and illustrated in this patent document.

**Claims**

1. A method of wireless communication, comprising:

   generating, by a first user device, an assistance information; and
   transmitting, by the first user device, the assistance information to a second user device,

   wherein the first user device receives a first information,
   wherein the first information includes a maximum size of the assistance information,
   wherein, in a case that the first information includes the maximum size of the assistance information, a size of the assistance information is not larger than the maximum size, and
   wherein the first user device reports, to a network device, the size of the assistance information.

2. The method of claim 1,
   wherein the first information further includes at least one of:

   a value N that indicates how many combinations of assistance information to report,
   a value N that indicates how many resources to report, or
   a resource priority group.

3. The method of claim 2, wherein, in a case that the first information includes a value N that indicates how many combinations of the assistance information to report or a value N that indicates how many resources to report, at most N resources or combinations are included in the assistance information by the first user device, where N is a positive integer.

4. The method of claim 2, wherein, in a case that the first information includes the resource priority group, the first user device selects the resources included in the assistance information in the order of their sequence numbers.

5. The method of claim 2, wherein the resource priority group includes one or more resources excluding one or more slots where the first user device does not expect to perform a sidelink, SL, reception from the second user device, in a case that the first user device is an intended receiver of the second user device.

6. The method of any of claims 3-4, wherein, in a case that not all resources or combinations are included in the assistance information, the first user device is configured to select a resource of remaining resources as another assistance information.

7. The method of claim 6, wherein the assistance information of the first user device and the other assistance information are multiplexed into a same medium assess control, MAC, protocol data unit, PDU.

8. The method of claim 7, wherein the assistance information and the other assistance information have different priorities.

9. An apparatus of wireless communication comprising a processor, wherein the processor is configured to implement a method as recited in any one of claims 1 to 8.

10. A computer-readable medium having processor-executable code stored thereupon, the code, upon execution by a processor, causing an apparatus to implement a method as recited in any one of claims 1 to 8.

**Patentansprüche**

1. Verfahren für eine drahtlose Kommunikation, aufweisend:

   Erzeugen, durch eine erste Benutzervorrichtung, von Hilfsinformationen; und
   Übertragen, durch die erste Benutzervorrichtung, der Hilfsinformationen an eine zweite Benutzervorrichtung,
   wobei die erste Benutzervorrichtung erste Informationen empfängt,
   wobei die ersten Informationen eine maximale Größe der Hilfsinformationen einschließen,
   wobei, in einem Fall, in dem die ersten Informationen die maximale Größe der Hilfsinformationen einschließen,
   eine Größe der Hilfsinformationen nicht größer als die maximale Größe ist, und
   wobei die erste Benutzervorrichtung die Größe der Hilfsinformationen an eine Netzwerkvorrichtung meldet.

2. Verfahren nach Anspruch 1,
   wobei die ersten Informationen ferner mindestens eines einschließen von:

   einem Wert N, der angibt, wie viele Kombinationen von Hilfsinformationen zu melden sind,
   einem Wert N, der angibt, wie viele Ressourcen zu melden sind, oder
   einer Ressourcenprioritätsgruppe.

3. Verfahren nach Anspruch 2, wobei, in einem Fall, in dem die ersten Informationen einen Wert N einschließen, der angibt, wie viele Kombinationen der Hilfsinformationen zu melden sind, oder einen Wert N, der angibt, wie viele Ressourcen zu melden sind, höchstens N Ressourcen oder Kombinationen in den Hilfsinformationen durch die erste Benutzervorrichtung eingeschlossen sind, wobei N eine positive ganze Zahl ist.

4. Verfahren nach Anspruch 2, wobei, in einem Fall, in dem die ersten Informationen die Ressourcenprioritätsgruppe einschließen, die erste Benutzervorrichtung die in den Hilfsinformationen eingeschlossenen Ressourcen in der Reihenfolge ihrer Sequenznummern auswählt.

5. Verfahren nach Anspruch 2, wobei die Ressourcenprioritätsgruppe eine oder mehrere Ressourcen einschließt, ausschließlich eines oder mehrerer Slots, in dem/denen die erste Benutzervorrichtung nicht damit rechnet, einen Sidelink-Empfang, SL-Empfang, von der zweiten Benutzervorrichtung durchzuführen, in einem Fall, in dem die erste Benutzervorrichtung ein beabsichtigter Empfänger der zweiten Benutzervorrichtung ist.

6. Verfahren nach einem der Ansprüche 3 bis 4, wobei in einem Fall, in dem nicht alle Ressourcen oder Kombinationen in den Hilfsinformationen eingeschlossen sind, die erste Benutzervorrichtung konfiguriert ist, um eine Ressource von verbleibenden Ressourcen als andere Hilfsinformationen auszuwählen.

7. Verfahren nach Anspruch 6, wobei die Hilfsinformationen der ersten Benutzervorrichtung und die anderen Hilfsinformationen in eine gleiche Medienzugriffskontroll-Protokolldateneinheit, MAC-PDU, gemultiplext werden.

8. Verfahren nach Anspruch 7, wobei die Hilfsinformationen und die anderen Hilfsinformationen unterschiedliche Prioritäten haben.

9. Einrichtung für die drahtlose Kommunikation, aufweisend einen Prozessor, wobei der Prozessor konfiguriert ist, um ein Verfahren wie in einem der Ansprüche 1 bis 8 angegeben zu implementieren.

10. Computerlesbares Medium, auf dem ein durch einen Prozessor ausführbarer Code gespeichert ist, wobei der Code bei Ausführung durch einen Prozessor eine Einrichtung veranlasst, ein Verfahren wie in einem der Ansprüche 1 bis 8 angegeben zu implementieren.

**Revendications**

1. Procédé de communication sans fil, comprenant :

   la génération, par un premier dispositif utilisateur, d'informations d'assistance ; et
   la transmission, par le premier dispositif utilisateur, des informations d'assistance à un second dispositif utilisateur,
   dans lequel le premier dispositif utilisateur reçoit de premières informations,
   dans lequel les premières informations comportent une taille maximale des informations d'assistance,
   dans lequel, dans un cas où les premières informations comportent la taille maximale des informations d'assistance, une taille des informations d'assistance n'est pas supérieure à la taille maximale, et
   dans lequel le premier dispositif utilisateur rapporte, à un dispositif de réseau, la taille des informations d'assistance.

2. Procédé selon la revendication 1,
   dans lequel les premières informations comportent au moins l'un parmi :

   une valeur N qui indique le nombre de combinaisons d'informations d'assistance à rapporter,
   une valeur N qui indique le nombre de ressources à rapporter, ou
   un groupe prioritaire de ressources.

3. Procédé selon la revendication 2, dans lequel, dans un cas où les premières informations comportent une valeur N qui indique le nombre de combinaisons des informations d'assistance à rapporter ou une valeur N qui indique le nombre de ressources à rapporter, au plus N ressources ou combinaisons sont incluses dans les informations d'assistance par le premier dispositif utilisateur, où N est un nombre entier positif.

4. Procédé selon la revendication 2, dans lequel, dans un cas où les premières informations comportent le groupe prioritaire de ressources, le premier dispositif utilisateur sélectionne les ressources incluses dans les informations d'assistance dans l'ordre de leurs numéros de séquence.

5. Procédé selon la revendication 2, dans lequel le groupe de priorités de ressources comporte une ou plusieurs ressources excluant un ou plusieurs créneaux où le premier dispositif utilisateur ne s'attend pas à réaliser une réception de liaison latérale, SL, à partir du second dispositif utilisateur, dans un cas où le premier dispositif utilisateur est un récepteur prévu du second dispositif utilisateur.

6. Procédé selon l'une quelconque des revendications 3 à 4, dans lequel, dans un cas où toutes les ressources ou combinaisons ne sont pas incluses dans les informations d'assistance, le premier dispositif utilisateur est configuré pour sélectionner une ressource parmi les ressources restantes en tant qu'autres informations d'assistance.

7. Procédé selon la revendication 6, dans lequel les informations d'assistance du premier dispositif utilisateur et les autres informations d'assistance sont multiplexées en une même unité de données de protocole, PDU, de commande d'évaluation du support, MAC.

8. Procédé selon la revendication 7, dans lequel les informations d'assistance et les autres informations d'assistance ont des priorités différentes.

9. Appareil de communication sans fil comprenant un processeur, dans lequel le processeur est configuré pour mettre en œuvre un procédé selon l'une quelconque des revendications 1 à 8.

10. Support lisible par ordinateur sur lequel est stocké un code exécutable par processeur, le code, lorsqu'il est exécuté par un processeur, amenant un appareil à mettre en œuvre un procédé selon l'une quelconque des revendications 1 à 8.

FIG. 1

**FIG. 2**

300

Generate, by a first user device , an assistance
information
310

Transmit, by the first user device, the assistance
information to a second user device
320

FIG. 3

400

Perform, by a first user device, a selection of a destination

410

Perform a multiplexing of data of a logical channel (LCH) or a media access control (MAC) control element (CE) belonging to the selected destination into a medium assess control (MAC) protocol data unit (PDU)

420

FIG. 4

**FIG. 5**

EP 4 461 060 B1

FIG. 6

**EP 4 461 060 B1**

**Patent documents cited in the description**

- WO 2021207459 A1

- WO 2022002125 A1